# EUROPEAN PATENT APPLICATION

(11) **EP 4 787 171 A1**
(43) Date of publication of application: **05.08.2026**
(21) Application number: 26152435.9
(22) Date of filing: 16.01.2026
(51) Int. Cl.: G06F 11/3668, G06F 11/3698

(54) **VEHICLE APPLICATION TEST FRAMEWORK**

(30) Priority: 04.02.2025 US 202519044821
(71) Applicant: Toyota Jidosha Kabushiki Kaisha, Toyota-shi, Aichi-ken 471-8571 (JP)
(72) Inventor: SUN, Linyu, Tokyo, 103-0022 (JP)
(74) Representative: D Young & Co LLP

(57) **Abstract**

Example embodiments of the present disclosure relate to a vehicle application testing framework. According to embodiments, a method for testing an application associated with a vehicle may include: receiving, by a processor of a first device and from a second device that implements the application, a first image associated with a graphical user interface (GUI) of the application; outputting, by the processor and to the second device, an instruction to perform an operation to the GUI of the application; receiving, by the processor and from the second device, at least one of a second image associated with the GUI of the application and a sound stream associated with the application; and outputting, by the processor, an indication of whether a target transition has occurred. The target transition may be associated with content configurations of the GUI.

## Description

### TECHNICAL FIELD

Example embodiments of the present disclosure relate to an application test framework, and more particularly, relate to the test framework for testing one or more applications associated with a vehicle.

### BACKGROUND

Modern vehicles increasingly rely on software applications to enhance functionality, safety, and user experience. Many of these applications include user interfaces (UIs) that enable a user to interact with the applications or the associated features, such as infotainment systems, navigation tools, driver assistance controls, and the like. In this regard, the operations of the UIs may involve dynamic transitional components (e.g., visual components, audio components, etc.) that may transition from one state to another in response to, for example, a user interaction, an event, and the like. Consequently, comprehensive testing of these applications is essential to validate the responsiveness, accuracy, and performance of the UIs under various scenarios and operational conditions.

### SUMMARY

Example embodiments consistent with the present disclosure implement a test framework that effectively and efficiently tests one or more vehicle applications.

According to embodiments, a method for testing an application associated with a vehicle may include: receiving, by a processor of a first device and from a second device that implements the application, a first image associated with a graphical user interface (GUI) of the application; outputting, by the processor and to the second device, an instruction to perform an operation to the GUI of the application; receiving, by the processor and from the second device, at least one of a second image associated with the GUI of the application and a sound stream associated with the application; and outputting, by the processor, an indication of whether a target transition has occurred. The target transition may be associated with content configurations of the GUI.

According to example embodiments, a device for testing an application associated with a vehicle may include: a memory storage storing computer-executable instructions and a processor communicatively coupled to the memory storage. The processor may be configured to execute the instructions to: receive, from a second device that implements the application, a first image associated with a GUI of the application; output, to the second device, an instruction to perform an operation to the GUI of the application; receive, from the second device, at least one of a second image associated with the GUI of the application and a sound stream associated with the application; and output an indication of whether a target transition has occurred. The target transition may be associated with content configurations of the GUI.

According to example embodiments, a non-transitory computer-readable recording medium may have recorded thereon instructions executable by a processor of a first device to cause the processor to perform a method to test an application associated with a vehicle. The method may include: receiving, from a second device that implements the application, a first image associated with a graphical user interface (GUI) of the application; outputting, to the second device, an instruction to perform an operation to the GUI of the application; receiving, from the second device, at least one of a second image associated with the GUI of the application and a sound stream associated with the application; and outputting an indication of whether a target transition has occurred. The target transition may be associated with content configurations of the GUI.

Additional aspects will be set forth in part in the description that follows and, in part, will be apparent from the description, or may be realized by practice of the presented embodiments of the disclosure.

### BRIEF DESCRIPTION OF THE DRAWINGS

Features, advantages, and significance of exemplary embodiments of the disclosure will be described below with reference to the accompanying drawings, in which like reference numerals denote like elements, and wherein:
FIG. 1A illustrates a diagram of an example system configuration, according to one or more example embodiments;
FIG. 1B illustrates a diagram of example operational units of a test device, according to one or more example embodiments;
FIG. 2, FIG. 3, FIG. 4, and FIG. 7 each illustrates a diagram of an example use case, according to one or more example embodiments;
FIG. 5 illustrates a diagram of an example method for testing an application associated with a vehicle, according to one or more example embodiments;
FIG. 6 illustrates a diagram of an example method for outputting an indication associated with a target transition, according to one or more example embodiments; and
FIG. 8 illustrates a diagram of example components of a device that may be configured to implement one or more example embodiments.

### DETAILED DESCRIPTION

The following detailed description of exemplary embodiments refers to the accompanying drawings. The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "[A] and/or [B]", "at least one of [A] and [B]" or "at least one of [A] or [B]" are to be understood as including only A, only B, or both A and B.

Expressions such as "at least one processor," where configured to implement a plurality of operations, execute a plurality of instructions, etc., are to be understood as a single processor implementing the plurality of operations, etc., or each of plural processors implementing at least some (but not necessarily all) of the plurality of operations, etc.

Reference throughout this specification to "one embodiment," "an embodiment," "non-limiting exemplary embodiment," or similar language means that a particular feature, structure, or characteristic described in connection with the indicated embodiment is included in at least one embodiment of the present solution. Thus, the phrases "in one embodiment", "in an embodiment," "in one non-limiting exemplary embodiment," and similar language throughout this specification may, but do not necessarily, all refer to the same embodiment.

Further, the described features, advantages, and characteristics of the present disclosure may be combined in any suitable manner in one or more example embodiments. One skilled in the relevant art will recognize, in light of the description herein, that the present disclosure can be practiced without one or more of the specific features or advantages of a particular embodiment. In other instances, additional features and advantages may be recognized in certain embodiments that may not be present in all embodiments of the present disclosure.

Furthermore, the term "vehicle" described herein refers to any suitable type of vehicle in which example embodiments of the present disclosure can be implemented. For instance, the "vehicle" may refer to a motorized vehicle such as a car, a truck, a bus, a motorcycle, or any other suitable type of automobile powered by an engine, motor, or other mechanical means. Alternatively or additionally, the "vehicle" described herein may refer to a bicycle, a skateboard, and any other suitable types of non-motorized vehicle, without departing from the scope of the present disclosure.

As described above, comprehensive testing of vehicle applications, particularly applications that involve user interfaces such as graphical user interfaces (GUIs) and human-machine interfaces (HMIs), is essential to ensure the responsiveness, accuracy, and performance of these applications across various scenarios and operational conditions.

In the related art, the testing of the vehicle applications that involve user interfaces is mainly performed manually by the users (e.g., test engineers). This manual approach typically involves engineers interacting with the GUIs and/or HMIs to validate their functionality, responsiveness, and overall performance. While manual testing allows for intuitive assessment and real-time feedback, it is time-consuming, resource-intensive, and prone to human error.

On the other hand, the concept of utilizing robots to test such applications has been introduced in the related art. For instance, the robots may be configured to physically interact with the user interfaces (e.g., pressing visual components on the GUIs, engaging with controls on HMIs, etc.). However, existing robotic solutions often lack the flexibility to adapt to diverse operational scenarios or the capability to comprehensively validate complex transitions in visual, audio, and other multimedia components. Further, testing the vehicle applications with robotic approaches is hard to scale out for testing a large number of applications due to the cost factor.

Furthermore, in the related art, the testing of the vehicle applications that involve user interfaces often requires editing the source code of the vehicle applications. This is typically required to insert test hooks, logging mechanisms, or debugging features that allow the tester to monitor application behavior or capture detailed data during testing. However, modifying source code introduces additional complexity, increases development effort, and raises the risk of introducing errors in the applications. Moreover, modifying the source code for testing purposes may not always be feasible, particularly when the source code is proprietary or otherwise limited due to the integration of third-party functions. For instance, when a vehicle application includes a Flutter function, it may be required to interface with Flutter-specific Application Programming Interfaces (APIs) or customize test hooks within the function's implementation to validate its behavior. The involvement of third-party components adds further challenges, as the users are required to have expertise in the underlying frameworks and APIs, which may not always be accessible or fully documented. These limitations underscore the need for a testing framework capable of conducting comprehensive and reliable tests without requiring invasive source code modifications or specialized access to third-party components.

Additionally, the design of user interfaces of the vehicle applications, such as the positioning of visual components on GUIs, their color, size, overall layout, and the like, frequently undergoes changes during development and updates. These frequent modifications further complicate the testing process, as they necessitate reconfiguration of test scripts or methodologies to align with the latest design iterations. This dynamic and evolving nature of vehicle application user interfaces underscores the need for a flexible and adaptive testing framework capable of accommodating such variations without extensive manual intervention or source code modification.

Example embodiments of the present disclosure provide a system, a method, a device, and the like, that implements a testing framework that effectively and efficiently tests one or more vehicle applications, particularly vehicle application(s) that involve a user interface, and ultimately addresses the problems in the related art. Further descriptions of the features, components, configuration, operations, and implementations of the example embodiments of the present disclosure are provided in the following.

### Example System Configuration

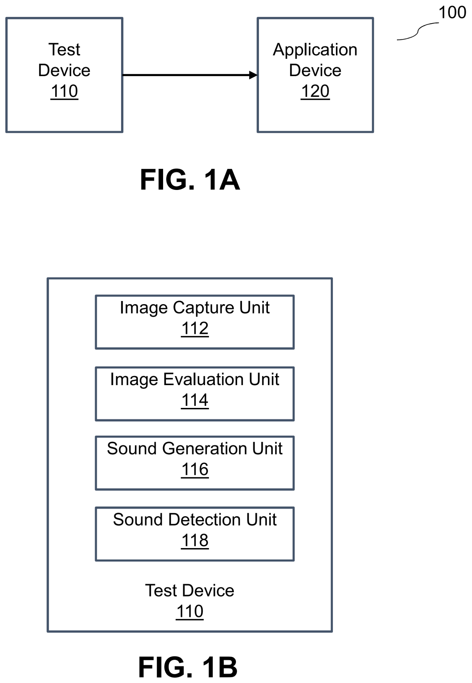

FIG. 1A illustrates a diagram of an example system configuration 100, according to one or more example embodiments. As illustrated in FIG. 1A, the system 100 may include a test device 110 and an application device 120. For descriptive purposes, the test device 110 may also be referred to herein as the "first device" and the application device 120 may also be referred to herein as the "second device".

The test device 110 may include any suitable device that can implement a testing environment for testing vehicle applications. For instance, the test device 110 may include a simulation-based device such as a Model-in-the-Loop (MIL) simulator, a Software-in-the-Loop(SIL) simulator, a Hardware-in-the-Loop (HIL) simulator, and/or a Processor-in-the-Loop (PIL) simulator, that may be configured to simulate the testing environment. Alternatively or additionally, the test device 110 may include a general-purpose computing device, such as a personal computer (PC), a laptop, a mobile device, and/or an industrial computer, that may be configured with testing software to thereby implement the testing environment. According to example embodiments, the testing environment may be implemented in a cloud-based environment, in the form of virtual machines (VMs) or containers.

The application device 120 may include any suitable device that can implement one or more vehicle applications. According to example embodiments, the application device 120 may include a device implementable in a vehicle, such as an electronic control unit (ECU), a telematics control unit (TCU), a human-machine interface (HMI) device (e.g., touchscreens, voice command control system, etc.), and/or any other suitable in-vehicle device that implementable in a vehicle (e.g., SoC, embedded system, vehicle accessory, aftermarket device, etc.). According to example embodiments, the application device 120 may include a device similar to the test device 110. For instance, the application device 120 may include a simulation-based device (e.g., MIL simulator, SIL simulator, HIL simulator, etc.) and/or a general-purpose computing device (e.g., PC, etc.) that may be configured to implement the vehicle application(s) for testing purposes.

According to example embodiments, the application device 120 may be configured to implement the vehicle application(s) therein, or may interact with another component (e.g., a server, an ECU, etc.) that implements the vehicle application(s). Further, the application device 120 may include a component (e.g., a screen, etc.) that generates and displays one or more user interfaces (e.g., GUIs, etc.) of the vehicle application(s).

According to example embodiments, the vehicle application that may be implementable by the application device 120 and may be tested by the test device 110 may be a fully developed application or a partially developed application. Further, the vehicle application may include a human-machine interface (HMI) application and/or a front-end application. Furthermore, the vehicle application may be associated with at least one of: a vehicle navigation system, an in-vehicle infotainment system, an advanced driver assistance system (ADAS), a voice assistant system, a driver assistance system, a parking assistance system, and a telephony system.

The test device 110 and the application device 120 may be communicatively coupled to each other, via a wired connection, a wireless connection, or a combination of wired and wireless connections. Accordingly, the test device 110 may interact with the application device 120 to simulate operations on the vehicle application(s) implemented by the application device 120, and then determine whether a target transition has occurred based on, for example, content configurations of the GUI. As further described below, in some example embodiments, the content configurations of the GUI may be defined in a configuration file.

Next, example operational units of the test device 110 are described. FIG. 1B illustrates a diagram of example operational units or components of the test device 110, according to one or more example embodiments.

As illustrated in FIG. 1B, the test device 110 may include an image capture unit 112, an image evaluation unit 114, a sound generation unit 116, and a sound detection unit 118. One or more of these units 112-118 may be implemented in the software form and/or hardware form. For instance, the test device 110 may include one or more hardware components dedicated to performing the operations of one or more of the units 112-118, and/or the operations/functions of one or more of the units 112-118 may be implemented in virtual form where a processing unit (e.g., processor, processing core, etc.) may be configured to execute the one or more of the units 112-118 (or the associated computer-readable instructions) to thereby simulate or perform the associated functionalities and operations.

According to example embodiments, the test device 110 may be configured to implement the image capture unit 112 to generate and provide, to the application device 120, an instruction to capture an image(s) when required. Further, the test device 110 may also be configured to implement the image capture unit 112 to receive, from the application device 120, a captured image(s). In some example implementations, the test device 110 may be configured to implement the image capture unit 112 to preprocess the captured image(s) provided by the application device 120, such as resizing/cropping the image(s), reducing the noise in the image(s), normalizing the image(s), adjusting the contrast/colors of the image(s), and the like.

According to example embodiments, the test device 110 may be configured to implement the image evaluation unit 114 to process the image(s) and evaluate the image(s) thereby. For instance, the test device 110 may be configured to implement the image evaluation unit 114 to perform pixel-by-pixel comparison, key-point detection, feature matching, object identification, and any other suitable computer vision technologies, to thereby process and evaluate the image(s).

According to example embodiments, the test device 110 may be configured to implement the sound generation unit 116 to generate and/or instruct the application device 120 to generate a sound stream or a sound effect. In some example implementations, the test device 110 may be configured to implement the sound generation unit 116 to instruct the application device 120 to capture a sound stream when required.

According to example embodiments, the test device 110 may be configured to implement the sound detection unit 118 to receive, from the application device 120, a captured sound stream(s). Further, the test device 110 may be configured to implement the sound detection unit 118 to process the sound stream(s) captured by the application device 120 to detect a target sound/audio component from the sound stream(s). For instance, the test device 110 may be configured to analyze a timestamp in the sound stream(s), detect an audio event in the sound stream(s), perform cross-correlation analysis, perform audio recognition, perform frequency matching, and the like to process the received sound stream(s).

The units 112-118 may interoperate to verify and test one or more vehicle applications implemented by the application device 120. It is contemplated that the components/units illustrated in FIG. 1B are merely examples and the scope of the present disclosure should not be limited thereto. Specifically, the test device 110 may include more/less components, the components may be configured or arranged in a different manner, and the like, without departing from the scope of the present disclosure.

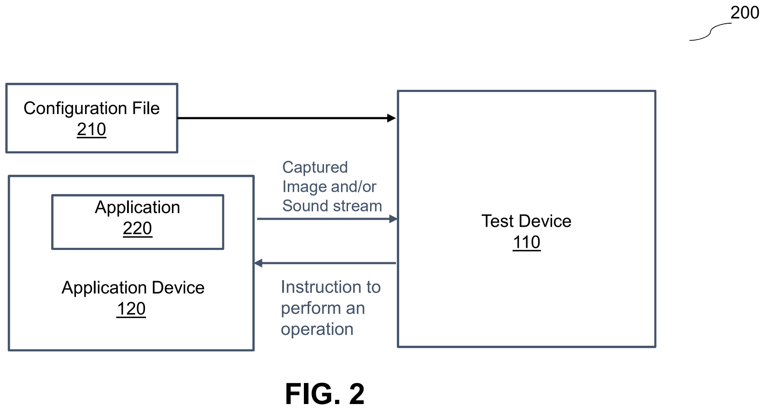

FIG. 2 illustrates a diagram of an example use case 200, according to one or more example embodiments. As illustrated in FIG. 2, the test device 110 may communicate with the application device 120 that implements an application 220, to thereby simulate operations on the application 220 and then determine whether a target transition has occurred based on content configurations of the GUI associated with the application 220. In the example of FIG. 2, the content configurations of the GUI are defined in a configuration file 210.

According to example embodiments, the test device 110 may receive a first image from the application device 120. The first image may include an image of the application 220 captured by the application device 120. For instance, upon implementing the application 220, a GUI of the application 220 may be displayed on a screen of the application device 120. In that case, the application device 120 may capture (e.g., by performing screen capture operations, etc.) the image of the GUI. In some example implementations, the application device 120 may capture the image(s) upon receiving an instruction or request from the test device 110. The instruction/request for capturing the image(s) may be generated and provided by the image capture unit 112 (in FIG. 1B) of the test device 110.

Upon receiving the first image from the application device 120, the test device 110 may instruct the application device 120 to perform an operation to the application 220. For instance, the test device 110 may instruct the application device 120 to interact with a visual component (e.g., a button, a text field, etc.) on the GUI of the application 200, to output a sound effect, and/or perform any suitable operations on the application 220 to trigger a transition of the user interface of the application 200. The instruction may be generated and provided by the sound generation unit 116 (in FIG. 1B) of the test device 110 (when the operation involves the generation and capturing of a sound stream).

Subsequently, the test device 110 may receive, from the application device 120, a second image and/or a sound stream. The second image and/or the sound stream may be associated with the operation performed by the application device 120 as instructed by the test device 110. For instance, the second image may include a GUI of the application 200 after the operation is performed, the sound stream may include a sound effect outputted by the application device 120 upon performing the operation, and the like.

Next, the test device 110 may determine, based on the second image and/or sound stream, whether a target transition has occurred upon performing the operation. Then, the test device 110 may output, to the application device 120 and/or other suitable device (e.g., a device of a user, etc.), an indication (e.g., a test result, a notification message, etc.) on whether the target transition has occurred.

According to example embodiments, the test device 110 may determine whether the first image is associated with a target screen (e.g., a target screen defined in the configuration file 210), and then instruct the application device 120 to capture the second image and/or the sound stream based on determining that the first image is associated with the target screen.

According to example embodiments, the operation (to be performed by the application device 120 on the application 200) may be defined in a test script that includes a test scenario predetermined by a user (e.g., test engineer). On the other hand, the target transition and target screen may be defined in the configuration file 210. Further, the configuration file 210 may also include information associated with other content configurations of the GUI (e.g., location/size of visual components, relationship between the visual components, relationship between a visual component and an audio component, etc.).

According to example embodiments, the test script and configuration file 210 may be regularly (or periodically) updated. The test script may be provided by a first user (e.g., a test engineer) to the test device 110 or a component accessible by the test device 110, while the configuration file 210 may be provided by a second user (e.g., the developer/vendor of the application) to the test device 110 or a component accessible by the test device 110. In some example implementations, the test script and the configuration file may be provided by the same user. The test device 110 may receive or obtain the configuration file 210 and the test script from an internal storage medium and/or external storage medium.

According to example embodiments, the target transition may include a screen transition between the first image and the second image, a screen-to-audio transition between the first image and the sound stream (e.g., upon an interaction on a visual component on the first image, the sound stream is presented, etc.), and a combination thereof. Further, the operation may include an operation to interact with a visual component of the GUI in the first image, an operation to output a sound at a preset timing/event, and a combination thereof.

According to example embodiments, the application device 110 may compare the first image and the second image (e.g., comparing the position/configuration of visual components in the GUIs, etc.) to determine a difference in at least one visual component in the GUI, and then determine whether the difference is consistent with the target transition. The target transitions may be associated with content configurations of the GUI, while the content configurations may be defined in the configuration file.

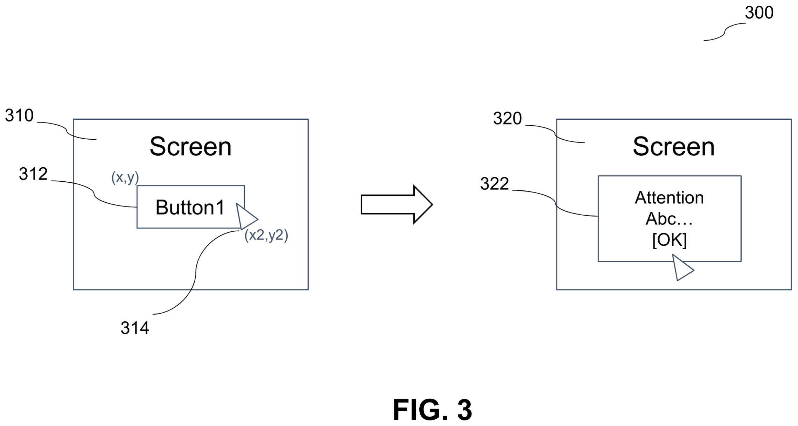

FIG. 3 illustrates a diagram of an example use case 300, according to one or more example embodiments. This example use case illustrates a transition of a first GUI 310 to a second GUI 320, when a cursor 314 performed a touch operation on a button 312 in the first GUI 310.

In this regard, the content configurations of the GUI (in the configuration file 210) may include information of the coordinates of the button 312 in the first GUI 310, thereby defining a first target screen. Further, the content configurations of the GUI (in the configuration file 210) may also specify that the button 310, upon being interacted or touched, may present a message that overlays or replaces the original message of the button 312, thereby defining a second target screen when a touch operation is performed on the button 312.

In this example use case, the application device 120 may capture a first image that includes the first GUI 310 and then provide the first image to the test device 110. The test device 110 may obtain the configuration file 210 and determine whether the first image is associated with a target screen (e.g., a first target screen) defined in the configuration file. Based on determining that the first image is associated with the target screen, the test device may output an instruction to the application device 120 to perform the operation on the application (e.g., perform a touch operation on the button 312) and capture a second image thereafter.

Upon receiving the instructions from the test device 110, the application device 120 may perform the instructed operation (e.g., move the cursor to the coordinate of the button 312 and then simulate a touch operation on the button 312). Upon performing the operation, the application device 120 may capture a second image that includes the second GUI 320, and then provide the second image to the test device 110.

Accordingly, the test device 110 may compare the GUI 310 in the first image and the GUI 320 to determine a difference in one or more visual components of the GUIs. In this example use case, the test device 110 may determine the difference between the button 312 and the button 322. Subsequently, the test device 110 may determine whether the difference is consistent with the target transition. For instance, the test device 110 may determine whether or not the difference in the message presented in the button 312 and the button 322 is consistent with the transition defined in the configuration file 210. Accordingly, based on determining that the difference is consistent with the target transition (i.e., the target transition has occurred upon performing the operation), the test device 110 may output an indication to indicate that the target transition has occurred. The indication may include, for example, a message indicating a successful testing/operation, a notification of the occurrence of the target transition, and the like. On the other hand, based on determining that the difference is not consistent with the target transition, (i.e., the target transition has not occurred upon performing the operation), the test device 110 may output an indication to indicate that the target transition has not occurred. The indication may include, for example, a message indicating a failed testing/operation, a notification of the absence of the target transition, and the like.

In some example embodiments, the configuration file 210 may include or specify a sound effect associated with a touch operation on the button 312, and the GUI 310 may output a sound effect (e.g., a general sound effect, a warning/error sound, a feedback/notification sound, a context-specific sound, etc.) when the button 312 is being interacted or touched. In this regard, instead of capturing a second image, the application device 120 may be instructed to capture and provide a sound stream upon performing the operation (e.g., the test device 110 may generate a sound effect and provide the same to the application device 120 such that the application device 120 may present the same when required, the test device 110 may instruct the application device 120 to generate and present the sound effect under certain conditions, etc.). Subsequently, the test device 110 may determine the occurrence of the target transition by determining whether or not the sound stream includes a sound effect specified in the configuration file 210. It is also contemplated that, in some example embodiments, both visual transition and audio transition may be involved, and the test device 110 and the application device 120 may interoperate in a similar manner to simulate and test the vehicle application.

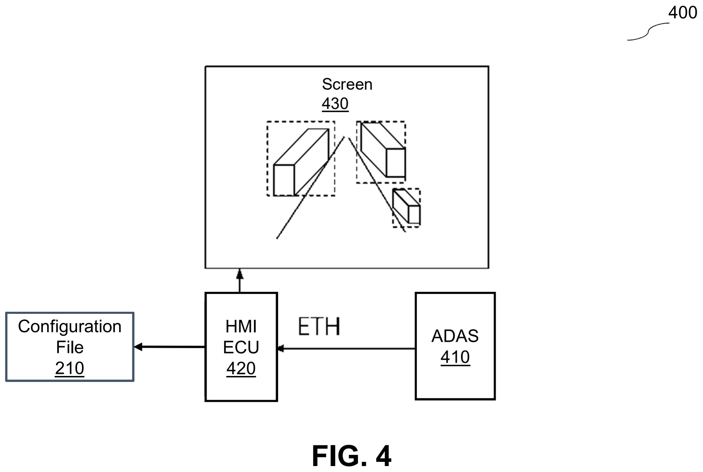

According to example embodiments, the configuration file 210 may be automatically updated by the application device 120. FIG. 4 illustrates a diagram of an example use case 400, according to one or more example embodiments. In this example use case, the application device 120 may include an HMI ECU 420 that may be configured to implement an HMI application associated with the ADAS 410. A GUI of the HMI application is displayed on the screen 430. For instance, the HMI application may be associated with an auto-cruising application that displays visual components such as an icon of a target vehicle, icons of surrounding vehicles, road status (e.g., length/width of the road, etc.), and the like.

In this regard, the HMI ECU 420 may continuously receive, from the ADAS 410 (or an associated ECU/sensor) in real-time (or near-real-time), information associated with the surroundings of the target vehicle. Accordingly, the HMI ECU 420 may update the configuration file 210 (e.g., the position of the vehicle icons, the relationship between the vehicle icons, etc.) based on the latest information.

It is contemplated that the example use cases 300 and 400 are merely examples and the scope of the present disclosure should not be limited thereto. For instance, the configuration file 210 may include additional and/or different information that may be utilized by the test device 110 to determine the target screen, target transition, and the like, the transition of the GUI 310 may be different from as described, the application device 120 may implement other types of applications and interact with other type of vehicle systems/components to update the configuration file 210, and the like, without departing from the scope of the present disclosure.

### Example Operations

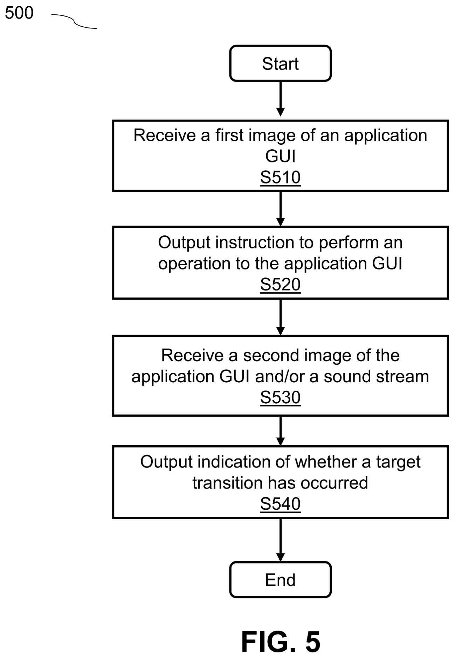

As described above, various operations may be performed by the test device 110 and the application device 120 (or a processor(s) associated therewith) to simulate and test one or more vehicle applications. Several example operations, according to one or more example embodiments, are described in the following with reference to FIG. 5 to FIG. 7. One or more operations (or the data involved therein) may be similar to those described above with reference to FIG. 1 to FIG. 4, thus it may be understood that the described operation(s)/data may be similarly applied to the operations in FIG. 5 to FIG. 7 (unless described otherwise) and redundant descriptions associated therewith may be omitted for conciseness.

For descriptive purposes, the operations are mainly described as being performed by the test device 110 or a processor associated with the test device 110. It can be understood that, in actual implementations, the application device 120 may perform similar/related operations from the opposite side, without departing from the scope of the present disclosure. For instance, an operation of the test device 110 receiving a message/data from the application device 120 may indicate or suggest an operation of the application device 120 sending the message/data to the test device 110, an operation of the test device 110 outputting an instruction to perform an operation to the application device 120 may indicate or suggest an operation of the application device 120 receiving the instruction and performing the operation as instructed, and the like.

According to example embodiments, the test device 110 may include one or more hardware components or devices, and one or more operations described hereinbelow may be performed by said one or more hardware components. For instance, the test device 110 may include (or may implement) a processor and a memory/storage, wherein the memory/storage may include computer-executable instructions which, when being executed by the processor, cause the processor to perform one or more operations described herein.

FIG. 5 illustrates a diagram of an example method 500 for testing an application associated with a vehicle, according to one or more example embodiments. The application may include at least one of an HMI application and a front-end application, wherein the at least one of the HMI application and the front-end application may be associated with at least one of: a vehicle navigation system, an IVI system, an ADAS, a voice assistant system, a parking assistance system, and a telephony system.

As illustrated in FIG. 5, at operation S510, a first device (e.g., the test device 110 or a processor associated therewith) may be configured to receive a first image associated with a GUI of the application. Specifically, the first device may receive the first image from a second device that implements the application (e.g., the application device 120 or a component such as an ECU associated therewith).

At operation S520, the first device (or the associated processor) may be configured to output, to the second device, an instruction to perform an operation to the GUI of the application. The operation may include: an operation to interact with a visual component of the GUI, an operation to output a sound at a preset timing, and a combination thereof. Further, the operation may be defined in a test script, while the test script may include a test scenario that is predetermined by a user (e.g., a test engineer).

At operation S530, the first device (or the associated processor) may be configured to receive, from the second device, at least one of a second image associated with the GUI of the application and a sound stream associated with the application. In some example embodiments, the first device (or the associated processor) may receive multiple images and/or multiple sound streams from the second device.

At operation S540, the first device (or the associated processor) may be configured to output an indication of whether a target transition has occurred. According to example embodiments, the first device (or the associated processor) may output the indication to the second device and/or a device associated with the user (e.g., a user equipment of the test engineer, etc.). The target transition may be associated with content configurations of the GUI (which may be included or defined in a configuration file). According to example embodiments, the target transition may include a screen transition between the first image and the second image, a screen-to-audio transition between the first image and the sound stream, and a combination thereof.

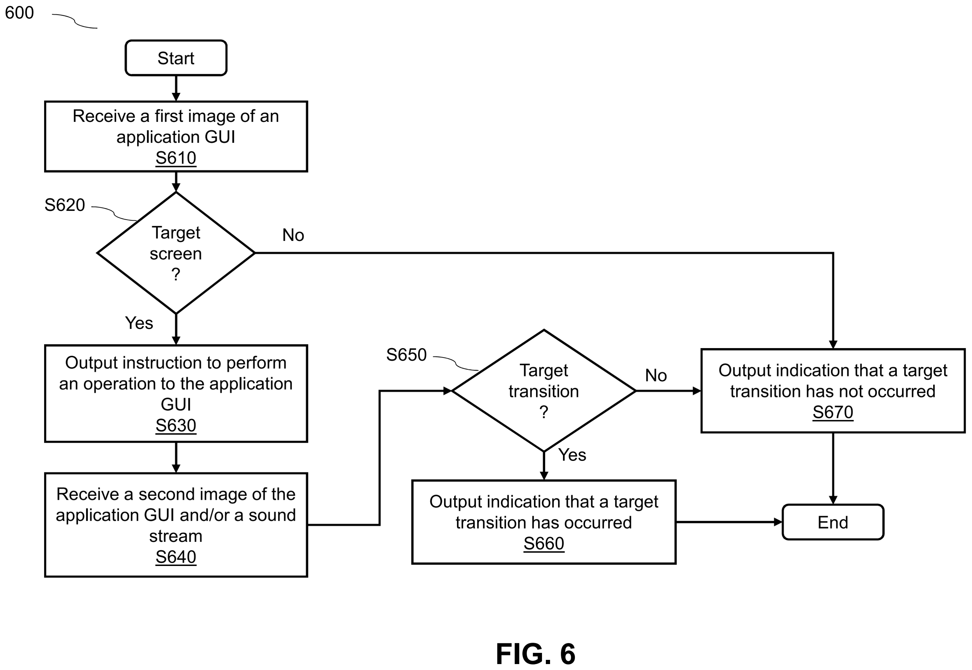

FIG. 6 illustrates a diagram of an example method 600 for outputting an indication associated with a target transition, according to one or more example embodiments. One or more operations in method 600 may be associated with one or more operations in method 500.

As illustrated in FIG. 6, at operation S610, the first device (or the associated processor) may be configured to receive a first image of a GUI of the application. This operation may be similar to operation S510 in FIG. 5, and thus redundant descriptions associated therewith may be omitted below for conciseness.

At operation S620, the first device (or the associated processor) may be configured to determine whether the first image is associated with a target screen. The target screen may be defined in a configuration file. Accordingly, based on determining that the first image is associated with the target screen, the method 600 may proceed to operation S630. Otherwise, based on determining that the first image is not associated with the target screen, the method 600 may proceed to operation S670.

At operation S630, the first device (or the associated processor) may be configured to output an instruction to the second device to perform an operation to the GUI of the application (similar to operation S520 in method 500). Subsequently, the first device (or the associated processor) may be configured to output an instruction to the second device to capture at least one of the second image and the sound stream.

At operation S640, the first device (or the associated processor) may be configured to receive, from the second device, at least one of a second image associated with the GUI of the application and a sound stream associated with the application. This operation may be similar to operation S530 in FIG. 5, and thus redundant descriptions associated therewith may be omitted below for conciseness.

At operation S650, the first device (or the associated processor) may be configured to determine whether a target transition has occurred. This operation may be performed prior to operation S540 of the method 500.

According to example embodiments, the first device (or the associated processor) may be configured to determine whether a target transition has occurred based on the configuration file. Specifically, if the second image is received at operation S640, the first device (or the associated processor) may compare the GUI in the first image to the GUI in the second image to determine a difference in at least one visual component of the GUI, and then determine whether the difference is consistent with the target transition (defined in the configuration file). Accordingly, based on determining that the difference is consistent with the target transition, the first device (or the associated processor) may determine that the target transition has occurred and the method 600 may proceed to operation S660. Otherwise, based on determining that the difference is not consistent with the target transition, the first device (or the associated processor) may determine that the target transition has not occurred and the method 600 may proceed to operation S670.

Alternatively or additionally, if the sound stream is received at operation S640, the first device (or the associated processor) may determine (based on the configuration file) whether the sound stream is associated with the operation performed to the GUI. Accordingly, based on determining that the sound stream is associated with the operation performed to the GUI, the first device (or the associated processor) may determine that the target transition has occurred and the method 600 may proceed to operation S660. Otherwise, based on determining that the sound stream is not associated with the operation performed to the GUI, the first device (or the associated processor) may determine that the target transition has not occurred and the method 600 may proceed to operation S670.

At operation S660, the first device (or the associated processor) may be configured to output an indication to indicate that the target transition has occurred. Conversely, at operation S670, the first device (or the associated processor) may be configured to output an indication to indicate that the target transition has not occurred. Operations S660 and 670 may be part of operation S540 of method 500.

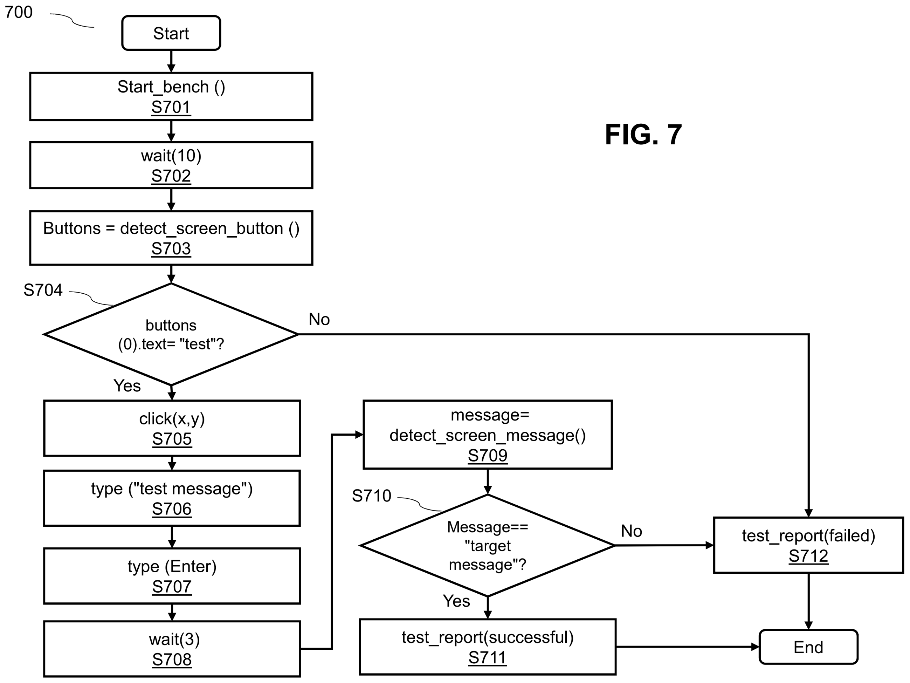

Next, an example use case associated with the method 600 is described with reference to FIG. 7. Specifically, FIG. 7 illustrates a flow diagram of an example use case 700, according to one or more example embodiments.

As illustrated in FIG. 7, at operation S701, the first device (or the associated processor) may be configured to start a test bench. For instance, the first device (or the associated processor) may initialize the test bench based on the test script (predefined by the user and stored in a storage medium), and then provide a signal or message to notify the second device.

At operation S702, the first device (or the associated processor) may be configured to wait for a predetermined period of time upon performing operation S701. For instance, in this example use case, the first device (or the associated processor) may wait for 10 seconds after starting the test bench. This predetermined period of time allows the second device to activate or implement the associated vehicle application, and provide further communication to the first device as required.

Assuming that the first device (or the associated processor) has received a first image of a GUI of the application from the second device, at operation S703, the first device (or the associated processor) may be configured to process the first image to analyze the visual component(s) of the GUI. In this example use case, the first device (or the associated processor) may determine or detect a button presented in the screen or the GUI.

Accordingly, at operation S704, the first device (or the associated processor) may be configured to determine whether or not a target screen is displayed in the GUI. In this example use case, the first device (or the associated processor) may determine whether or not the button in the GUI has an associated text of "test". Accordingly, based on determining that the button in the GUI has the associated text, the first device (or the associated processor) may determine that the target screen is displayed, and the example use case may proceed to operation S705. Otherwise, based on determining that the button in the GUI does not have the associated text, the first device (or the associated processor) may determine that the target screen is not displayed, and the example use case may proceed to operation S712.

At operation S705, the first device (or the associated processor) may provide an instruction to the second device to perform a first operation to the GUI of the application (e.g., perform a click operation on a specific coordinate (x, y) of the GUI). Further, at operation S706, the first device (or the associated processor) may provide an instruction to the second device to perform a second operation to the GUI of the application (e.g., type a message "test message" on the GUI). Furthermore, at operation S707, the first device (or the associated processor) may provide an instruction to the second device to perform a third operation to the GUI of the application (e.g., perform an input/enter operation to insert the message to the GUI). In some example embodiments, the first device (or the associated processor) may provide a consolidated instruction to the second device to perform multiple operations to the GUI.

At operation S708, the first device (or the associated processor) may be configured to wait for a predetermined period of time upon performing operations S705-S707. For instance, in this example use case, the first device (or the associated processor) may wait for 3 seconds after instructing the second device to perform the operations to the GUI. This predetermined period of time allows the second device to perform the operations to the GUI as instructed by the first device, and provide further communication to the first device as required.

Assuming that the first device (or the associated processor) has received a second image of a GUI of the application from the second device, at operation S709, the first device (or the associated processor) may be configured to process the second image to detect a message presented on the screen of the GUI.

Accordingly, at operation S710, the first device (or the associated processor) may be configured to determine whether a target transition has occurred. For instance, in this example use case, the first device (or the associated processor) may determine whether or not the message presented on the screen/GUI is consistent with a target message (defined in the configuration file). Based on determining that the presented message is consistent with the target message, the example use case may proceed to operation S711, at which the first device (or the associated process) may output a test report that indicates a successful test (or a successful transition of the GUI of the application). Otherwise, based on determining that the presented message is not consistent with the target message, the example use case may proceed to operation S712, at which the first device (or the associated process) may output a test report that indicates a failed test (or a failed transition of the GUI of the application).

It is contemplated that the operations illustrated in FIG. 5 to FIG. 7 are merely examples and the scope of the present disclosure should not be limited thereto. Specifically, the method 500 and method 600, as well as the example use case 700, may include more/less operations than as illustrated, and/or may perform the operations in any suitable sequential manner, without departing from the scope of the present disclosure.

### Example Components

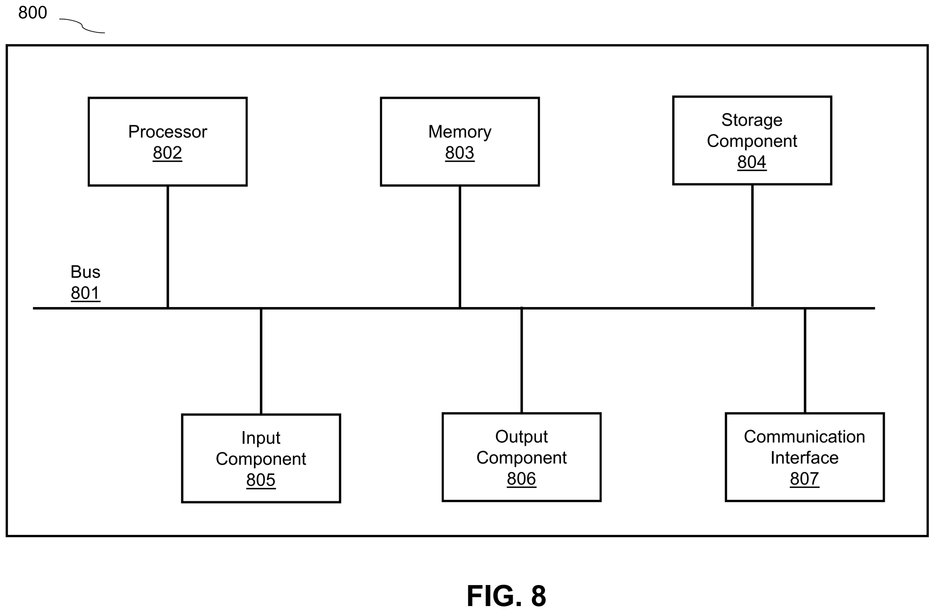

FIG. 8 illustrates a diagram of example components of a device 800, according to one or more example embodiments. The device 800 may refer to the test device (i.e., the first device) and/or the application device (i.e., the second device) described herein.

As illustrated in FIG. 8, the device 800 may include at least one bus 801, at least one processor 802, at least one memory 803, at least one storage component 804, at least one input component 805, at least one output component 806, and at least one communication interface 807.

It is contemplated that the device 800 may include more or fewer components than illustrated in FIG. 8, without departing from the scope of the present disclosure. For instance, in some example embodiments, the device 800 may include a plurality of storage components 804, the input component 805 and the output component 806 may be implemented as a transceiver component, the memory 803 and storage component 804 may be implemented as a memory storage, and the like.

The bus 801 may be configured to facilitate or enable communications among the components of the device 800. Specifically, the bus 801 may communicatively couple the components to each other and provide a means for data transfer and flow of control signals between the components. The bus 801 may include one or more of: an internal bus, an address bus, a data bus, a control bus, a controller area network (CAN) bus, an Ethernet bus, a peripheral component interconnect express (PCIe) bus, and any other suitable type of bus that can be implemented in the device 800 to enable communication and coordination between the components within the device 800 in real-time (or near-real-time/non-real-time).

The processor 802 may be implemented in hardware, firmware, or a combination of hardware and software, and may be configured to handle real-time (or near real-time/non-real-time) data processing and control of the device 800. The processor 802 may include one or more of: a central processing unit (CPU), a graphics processing unit (GPU), a neural processing unit (NPU), a tensor processing unit (TPU), an accelerated processing unit (APU), a microprocessor, a microcontroller, a digital signal processor (DSP), a field-programmable gate array (FPGA), an application-specific integrated circuit (ASIC), and/or another type of processing or computing component that can be implemented in the device 800. In some example implementations, the processor 802 may be capable of being programmed to perform one or more operations described herein. Further, the processor 802 may include a plurality of processing units, each of which may be dedicated to performing a specific operation.

The memory 803 may include one or more storage mediums for storing temporary data, runtime variables, program instructions, and buffers required for the operations of the device 800. The memory 803 may include one or more of: a flash memory, a read-only memory (ROM), a random-access memory (RAM), a dynamic or static storage device (e.g., a flash memory, a magnetic memory, and/or an optical memory), any other suitable type of memory that can be implemented in the device 800 to store information and/or instructions for use by the processor 802.

The storage component 804 may be configured to store non-volatile data, such as firmware, configuration settings, calibration data, information, and/or software related to the operation and use of the device 800. For example, the storage component 804 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

According to embodiments, the memory 803 and/or the storage component 804 may be configured to store computer-readable or computer-executable instructions for implementing one or more operations of the device 800. The memory 803 and/or the storage component 804 may provide the stored information for the execution of the processor 802. Furthermore, the memory 803 and/or the storage component 804 may include data or information that may be utilized by the processor 802 to test the vehicle applications, such as the configuration file and/or the test script described herein. Further, the memory 803 and/or the storage component 804 may be configured to store one or more data involved in the operations of the device 800, such as the instructions generated by the device during the operations, the data or message provided by another devices, the indications/results of the testing, and the like.

The input component 805 may include one or more input components that permit the device 800 to receive information, such as via user input (e.g., a touch screen display, a keyboard, a keypad, a mouse, a button, a switch, and/or a microphone). The output component 806 may include one or more output components that provide output information from the device 800 (e.g., a display, a speaker, a navigation device, one or more light-emitting diodes (LEDs), etc.) According to embodiments, the input component 805 and/or the output component 806 may be optional and may be excluded from the device 800.

The communication interface 807 may include a transceiver-like component (e.g., a transceiver and/or a separate receiver and transmitter) that enables the device 800 to communicate with other components (e.g., ECUs, user devices, etc.), such as via a wired connection, a wireless connection, or a combination of wired and wireless connections. For example, communication interface 807 may include a controller area network (CAN) bus interface, an Ethernet interface, an optical interface, a coaxial interface, an infrared interface, a radio frequency (RF) interface, a universal serial bus (USB) interface, a Wi-Fi interface, a cellular network interface, or the like.

According to one or more embodiments, the communication interface 807 may include at least one input/output (I/O) interface, at least one network interface, at least one storage interface, or the like, that enable the components 802-806 to communicate with other components. Further, the communication interface 807 may include one or more application programming interfaces (APIs) that allow the device 800 (or one or more components included therein) to communicate with one or more software applications (e.g., software application managed by the ECUs, etc.).

Computer-executable instructions (e.g., software instructions, etc.) may be read into memory 803 and/or storage component 804 from another computer-readable medium or from another device (e.g., a remote server, an external storage, etc.) via, for example, the communication interface 807. When executed, the computer-executable instructions stored in memory 803 and/or storage component 804 may cause the processor 802 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

### Various Aspects of Embodiments

In view of the above, example embodiments of the present disclosure provide a system, a device, a method, and the like, that implement a test framework that effectively and efficiently tests one or more vehicle applications.

Ultimately, the vehicle application(s) can be tested (e.g., the transition and UI operation may be tested and verified, etc.) without editing the associated source code. Further, the configurations of user interface of the vehicle application(s), including GUI design (e.g., position of components, color, size, etc.), may be defined in a configuration file that is regularly updated and provided by the associated user, thereby enabling the verification and testing of the vehicle application to be based on the most updated configuration. Furthermore, the operations to be performed on the application (e.g., touching a specific visual component, outputting a specific sound effect, etc.) are defined in a test script that is predetermined by the associated user. Accordingly, the testing may be automatically performed based on the predetermined operations, thereby resembling a real user interaction with the application during the testing.

In addition, the operations of the testing and verification can be performed by a dedicated device. For instance, operations associated with verification of target screen and target transition may be performed at the test device (based on the configuration file), while operations associated with the interaction with the vehicle application (e.g., touching a visual component, etc.) may be performed at the application device. Accordingly, robots, third-party functions (e.g., Flutter function), and third-party APIs (e.g., Flutter APIs) are not necessary for the testing. Specifically, the operations and test scenarios may be specified by the users (e.g., test engineer) and the test device only needs to instruct the application device (which has the required third-party functions and APIs implemented) to perform the required operation (e.g., touching a visual component, outputting a sound, etc.) and receive therefrom the captured images and/or sound streams in order to verify and test the application.

It is contemplated that features, advantages, and significances of example embodiments described hereinabove with reference to FIG. 1 to FIG. 8 are merely a portion of the present disclosure, and are not intended to be exhaustive or to limit the scope of the present disclosure.

It is understood that the specific order or hierarchy of blocks in the processes/ flowcharts disclosed herein is an illustration of example approaches. Based upon design preferences, it is understood that the specific order or hierarchy of blocks in the processes/ flowcharts may be rearranged. Further, some blocks may be combined or omitted. The accompanying method claims present elements of the various blocks in a sample order, and are not meant to be limited to the specific order or hierarchy presented.

Some example embodiments may relate to a system, a method, and/or a computer-readable medium at any possible technical detail level of integration. Further, as described hereinabove, one or more of the above components described above may be implemented as instructions stored on a computer readable medium and executable by at least one processor (and/or may include at least one processor ). The computer-readable medium may include a computer-readable non-transitory storage medium (or media) having computer-readable program instructions thereon for causing a processor (or processors) to carry out operations.

The computer readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object-oriented programming languages such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of an SoC, a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or another device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer-readable media according to various embodiments. In this regard, each block in the flowchart or block diagrams may represent a module, segment, or portion of instructions, which comprises one or more executable instructions for implementing the specified logical function(s). The method, computer system, and computer-readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

## Claims

1. A method for testing an application associated with a vehicle, the method comprising:
receiving, by a processor of a first device and from a second device that implements the application, a first image associated with a graphical user interface (GUI) of the application;
outputting, by the processor and to the second device, an instruction to perform an operation to the GUI of the application;
receiving, by the processor and from the second device, at least one of a second image associated with the GUI of the application and a sound stream associated with the application; and
outputting, by the processor, an indication of whether a target transition has occurred,
wherein the target transition is associated with content configurations of the GUI.

2. The method according to claim 1, wherein the outputting the indication comprises:
comparing, by the processor, the GUI in the first image to the GUI in the second image to determine a difference in at least one visual component of the GUI;
determining, by the processor, whether the difference is consistent with the target transition;
based on determining that the difference is consistent with the target transition, outputting the indication to indicate that the target transition has occurred; and
based on determining that the difference is not consistent with the target transition, outputting the indication to indicate that the target transition has not occurred.

3. The method according to claim 1 or 2, wherein the outputting the indication comprises:
determining, by the processor, whether the sound stream is associated with the operation performed to the GUI;
based on determining that the sound stream is associated with the operation performed to the GUI, outputting the indication to indicate that the target transition has occurred; and
based on determining that the sound stream is not associated with the operation performed to the GUI, outputting the indication to indicate that the target transition has not occurred.

4. The method according to any one of claims 1 to 3, wherein the application comprises at least one of a human-machine interface (HMI) application and a front-end application, wherein the at least one of the HMI application and the front-end application is associated with at least one of: a vehicle navigation system, an in-vehicle infotainment (IVI) system, an advanced driver assistance system (ADAS), a voice assistant system, a parking assistance system, and a telephony system.

5. The method according to any one of claims 1 to 4, wherein the target transition comprises: a screen transition between the first image and the second image, a screen-to-audio transition between the first image and the sound stream, and a combination thereof.

6. The method according to any one of claims 1 to 5, wherein the operation comprises: an operation to interact with a visual component of the GUI in the first image, an operation to output a sound at a preset timing, and a combination thereof.

7. The method according to any one of claims 1 to 6, wherein the operation is defined in a test script, wherein the test script comprises a test scenario that is predetermined by a user.

8. The method according to any one of claims 1 to 7, further comprising:
prior to the receiving the at least one of the second image and the sound stream, determining, by the processor, whether the first image is associated with a target screen;
based on determining that the first image is associated with the target screen, outputting an instruction to the second device to capture the at least one of the second image and the sound stream; and
based on determining that the first image is not associated with the target screen, outputting the indication to indicate that the target transition has not occurred.

9. The method according to any one of claims 1 to 8, wherein the second device comprises an electronic controller unit (ECU) of the vehicle.

10. A device for testing an application associated with a vehicle, the device comprising:
a memory storage storing computer-executable instructions; and
a processor communicatively coupled to the memory storage, wherein the processor is configured to execute the instructions to:
receive, from a second device that implements the application, a first image associated with a graphical user interface (GUI) of the application;
output, to the second device, an instruction to perform an operation to the GUI of the application;
receive, from the second device, at least one of a second image associated with the GUI of the application and a sound stream associated with the application; and
output an indication of whether a target transition has occurred,
wherein the target transition is associated with content configurations of the GUI.

11. The device according to claim 10, wherein the processor is configured to execute the instructions to output the indication by:
comparing the GUI in the first image to the GUI in the second image to determine a difference in at least one visual component of the GUI;
determining whether the difference is consistent with the target transition;
based on determining that the difference is consistent with the target transition, outputting the indication to indicate that the target transition has occurred; and
based on determining that the difference is not consistent with the target transition, outputting the indication to indicate that the target transition has not occurred.

12. The device according to claim 10 or 11, wherein the processor is configured to execute the instructions to output the indication by:
determining whether the sound stream is associated with the operation performed to the GUI;
based on determining that the sound stream is associated with the operation performed to the GUI, outputting the indication to indicate that the target transition has occurred; and
based on determining that the sound stream is not associated with the operation performed to the GUI, outputting the indication to indicate that the target transition has not occurred.

13. The device according to any one of claims 10 to 12, wherein the application comprises at least one of a human-machine interface (HMI) application and a front-end application, wherein the at least one of the HMI application and the front-end application is associated with at least one of: a vehicle navigation system, an in-vehicle infotainment (IVI) system, an advanced driver assistance system (ADAS), a voice assistant system, a parking assistance system, and a telephony system.

14. The device according to any one of claims 10 to 13, wherein the target transition comprises: a screen transition between the first image and the second image, a screen-to-audio transition between the first image and the sound stream, and a combination thereof.

15. A computer program causing a processor of a first device to perform a method to test an application associated with a vehicle, the method comprising:
receiving, from a second device that implements the application, a first image associated with a graphical user interface (GUI) of the application;
outputting, to the second device, an instruction to perform an operation to the GUI of the application;
receiving, from the second device, at least one of a second image associated with the GUI of the application and a sound stream associated with the application; and
outputting an indication of whether a target transition has occurred,
wherein the target transition is associated with content configurations of the GUI.
